# EUROPEAN PATENT SPECIFICATION

(11) **EP 2 261 143 B1**
(45) Date of publication and mention of the grant of the patent: **11.07.2012**
(21) Application number: 10164520.8
(22) Date of filing: 31.05.2010
(51) Int. Cl.: B65G 17/38, B65G 45/08, F27B 9/24, F27D 3/00

(54) **Conveyor chain for use in food oven for cooking pizza or the like**
Förderkette zur Verwendung in Öfen für Lebensmittel zum Backen von Pizzen oder Ähnlichem
Chaîne de convoyeur à utiliser dans un four d'aliments pour cuisiner une pizza ou similaire

(30) Priority: 09.06.2009 IT VR20090081
(43) Date of publication of application: 15.12.2010
(73) Proprietor: ITECA Impianti Tecnologici Alimentari Speciali S.P.A., 37050 Palu (Verona) (IT)
(72) Inventor: Benetti, Luigi, 37121 Verona (IT); Soave, Luca, 37135 Verona (IT)
(74) Representative: Autuori, Angelo

(56) References cited:
- DE-A1-102004 049 244
- DE-U1- 20 103 711
- US-A1- 2006 058 144
- US-B1- 6 707 014

## Description

### Field of invention

The present invention relates to the technical field of the food industry, and more particularly concerns a conveyor chain according to the preamble of claim 1 for use in food ovens for baking pizza or the like, and an oven for baking pizza or the like that includes such chain.

### Background Art

It is well known that in recent years the demand for pizza baked on stone has increased, resulting in the decrease in food industry of the demand for traditional wire mesh ovens in favour of stones ovens.

Inside these ovens, pizza's cooking take place on stones supported by bars disposed in succession in order to form the cooking plane throughout the oven. The ends of the bars are then attached to the chain links that move pizzas through the oven.

These chains are usually provided with support wheels that, moving along sliding tracks, support the movement of the chain.

Since in these ovens operating temperatures are relatively high, often above 300 ° C, one of the drawbacks of the known conveyor chains resides in the lubrication.

To overcome this disadvantage, conveyor chains have been made available in which lubrication is achieved by solid lubricatings.

From German patent DE-A1-102 004 049 244 a chain of this type is known according to the preamble of claim 1, which includes a plurality of inner links, each one comprising respective end bushings, and a plurality of outer links, each one comprising respective pins housed in their respective bushings for connection to inner links.

In this chain, each bushing internally comprises one or more solid lubricating elements to lubricate the interspace between the same and its connecting pin.

Lubricating elements have a generally toroidal shape, and are housed in the interspace between the pin and the bushing.

This known chain has several disadvantages.

First of all, the particular shape of the lubricating elements requires to create specific molds for the manufacture thereof, and to oversize plates and bushings, resulting in technical complications and increasing of the overall costs.

Moreover, for the same reason, the interspace between pin and bushing must be adequately sized to seat the lubricating elements, resulting in increased space and energy consumption throughout the oven.

Furthermore, in this chain, as the lubricating elements run out, the pitch between pin and bushing increases, thereby "stretching" the chain. This implies the danger of misalignment of the chain, with consequent difficulty of meshing with the relative pinions, the need for continuous maintenance and ultimately an increasing of the energy consumption of the oven.

### Summary of the invention

The object of the present invention is to overcome at least partly the above-mentioned drawbacks, by providing a conveyor chain for food ovens for cooking pizza or the like distinctly efficient and comparatively economic.

Another object of the invention is to provide a conveyor chain that has minimum overall dimensions.

Another object of the invention is to provide a conveyor chain having characteristics unchanging with time.

Another object of the invention is to provide a conveyor chain that allows an easy maintenance.

Another object of the invention is to provide a conveyor chain that minimizes the operating costs in time.

Another object of the invention is to provide a conveyor chain that minimizes the energy consumption of the oven where is assembled.

These and other objects, as more clearly shown hereafter, are fulfilled by a conveyor chain for use in food ovens for baking pizza or the like according to claim 1.

In its most general aspect, the conveyor chain of the invention includes a plurality of inner links, each one comprising respective end bushings, and a plurality of outer links, each one comprising respective pins housed in the bushings for connection to the inner links.

One or more of the bushings of the chain internally includes at least one lubricating element for lubricating the interspace between the bushing itself and its connecting pin.

Preferably, but not necessarily, the lubricating element will be of the solid type, and may be made of graphite, molybdenum disulphide, ceramic materials, copper, aluminium-bronze.

As used herein, the term "solid lubricating element" is intended as an element not included in a liquid matrix at least partly made of a lubricating material, i.e. suitable to reduce the friction between two or more mutually contacting surfaces, that at operating temperatures is in a solid state and is intended to be consumed gradually by abrasion, decreasing in volume until becoming powder.

Generally, the operating temperatures of the present invention are between 250 ° C and 450 °C.

The connection pin of the bushing may internally include one or more seats for housing one or more lubricating elements. If the pin includes more than one seat, each seat may include one or more lubricating elements.

Advantageously, each seat is in fluidic communication with the interspace between pin and bushing, so that the lubricating element lubricate the same interspace from inside the connection pin.

It is apparent that this embodiment can reduce the bulking, since the lubricating is contained inside the pin and not outward such as in the prior art solutions.

Further, thanks to this embodiment, the pin can be inserted with minimum clearance inside the bushing. In fact, in the chain according to the invention there is no need to oversize the interspaces, since the lubricating is contained inside the pin and not outward.

Thus, as the lubricating is consumed, the clearance between pin and bushing will not change, which guarantees the stability of the characteristics of the chain with time, and in particular the pitch thereof. Then, unlike the prior art solutions, there will be no need for frequent maintenance and replacement of parts caused by the chain elongation and misalignment.

This also ensures particularly low costs and energy consumptions.

The lubricating can reach the interspace from the seat in any way. In the invention, the seat of the lubricating element is faced to the inner surface of the bushing.

In other words, at least one end of the seat can directly face and communicate with the inner surface of the bushing, so that the lubricating element itself interacts therewith to be consumed gradually by abrasion.

The shape and size of the seat will be sufficient to allow this interaction to the end of the lubricating solid element. In particular, the size of said at least one end of the seat directly facing the inner surface of the bushing may be sufficient to allow passage through it of the end of the solid lubricating element designed to abrade against itself.

This will allow the lubrication of the interspace between pin and bushing in a practical, affordable and easy manner.

The connecting pin can be fixed in position in any way, e.g. by riveting.

However, in a preferred but not exclusive embodiment of the invention, the fixing may be made by removable fastening means, such as an elastic ring.

In this way it will be possible to replace the lubrication element in a practical and economical way, by simply removing the elastic ring and extracting the pin from the bushing.

Advantageously, the connecting pin can be of the full type, so as to increase the mechanical strength of the chain.

Appropriately, the chain of the invention may include a plurality of support wheels, susceptible to slide in suitable guide ways. These supporting wheels may be fixed to the chain in any way, for example, may be placed between the plates of the inner links, corresponding to the connecting bushings.

However, in a preferred but not exclusive embodiment of the invention, the supporting wheels can be coupled externally to the inner and outer links, in order to facilitate the replacement thereof.

In a further aspect of the invention, a food oven for baking pizza or the like according to claim 11 is provided.

Advantageous embodiments of the invention will be defined in accordance with the dependent claims.

### Brief description of the drawings

Further features and advantages of the invention will be more apparent upon reading of the detailed description of some preferred, non-exclusive embodiments of the invention, which are described as a non-limiting example with the help of the annexed drawings, in which:
**FIG. 1** is a schematic view of a food oven for cooking pizza that includes a chain according to the invention;
**FIG. 2** is a perspective view of a first embodiment of the chain according to the invention;
**FIGS. 3** and **4** are partially sectioned views of the embodiment of the conveyor chain of FIG. 2, respectively when the bushing **12** is on the going way **A** and on the back way **R;**
**FIG. 3a** is an enlarged view of some details of FIG. 3;
**FIGS. 5** and **6** are partially sectioned views of another example of realization of the conveyor chain according to the invention, respectively when the bushing **12** is on the going way **A** and on the back way **R;**
**FIGS. 7** and **8** are partially sectioned views of another example of realization of the conveyor chain according to the invention, respectively when the bushing **12** is on the going way **A** and on the back way **R.**

### Detailed description of some examples of preferred embodiment

Referring to the above figures, the conveyor chain according to the invention may be advantageously used in food ovens for baking pizza or the like, particularly of the stones type.

The invention has several parts or elements which are identical each other or otherwise substantially similar. Unless otherwise specified, these parts may be described individually and/or indicated by a single number, meaning that the features described and/or illustrated are common to all other parts or elements identical or otherwise substantially similar.

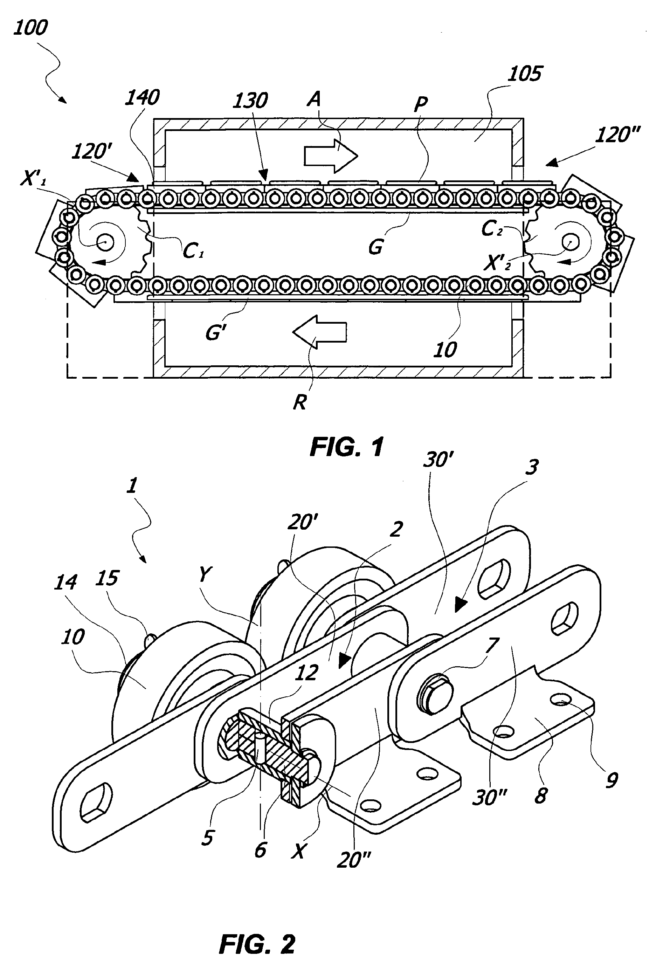

As visible in FIG. 1, the oven **100** will have a cooking chamber **105** which includes an inlet **120'** for the pizzas **P** to be baked, an outlet **120"** for the baked pizzas **P,** and a baking plane **130,** substantially defined by the upper surface of a plurality of stone elements **140,** such as refractory lava stone or similar.

Each stone element **140** is fixed, by one or more metal bars (not shown but well known *per se*), to conveyor chains **1,** which move them back and forward.

The chain **1** will move each stone element **140,** which may have a general parallelepiped-like shape, from the inlet **120'** to the outlet **120"** of the oven **100** for a first going way, generally referred to as **A,** and then vice versa from the outlet **120"** to the inlet **120',** upside down, for a way back **R.**

To this end, the chain **1,** formed by a plurality of inner links **2** and outer links **3,** is operatively mounted on two crown gear **C₁** and **C₂.** The latter, rotating about their axes of rotation **X'₁** and **X'₂**, will gear the links **2, 3** of the chain **1,** thereby moving the stone elements **140** along the way back and forward **A** and **R.**

Although in the attached figures a chain with external and internal links mechanically separated each other and mutually connected by pin-bushing system has been illustrated, it is understood that the same may also be made of one piece without departure from the scope of the invention, as defined by the appended claims.

In this case, the chain will be formed by a plurality of mutually connected modules, wherein each module will include both inner and outer link.

In order to allow the fastening of the bars which support the stone elements **140,** each link **2, 3** can include an appendix **8** provided with fastening holes **9.**

To guide the chain **1** during its movement, a plurality of supporting wheels **10** are fixed to the chain **1,** that slide along horizontal going and return guides **G, G'.**

Laterally, the supporting wheels **10** are guided by side guides or runners, not shown but well known *per se.* These guides will act on the control elements **14** of the supporting wheels **10** to correct possible lateral deviation of the chain **1.**

The control elements **14,** which can be fixed to the supporting wheels **10** by suitable split pins **15,** may be made of a material having good antifriction properties, such as aluminium-bronze, in order to slide with low friction on the side guides.

Advantageous, the supporting wheels **10** can be removably coupled externally to the inner and outer links **2, 3,** in order to facilitate replacement thereof without replacing the entire chain.

Each inner link **2** can be formed by one pair of facing plates **20', 20"** joined by end bushings **12.**

On the other hand, each outer link **3** may include one pair of facing plates **30', 30",** connected to plates **20', 20"** of the adjacent inner links **2** by suitable connecting pins **6** housed in the bushings **12.**

Each pin **6** may define a first longitudinal axis **X** substantially parallel to the baking plane **130.**

In view of the loads that the chain has to support, the pins **6** may be of the full type.

Preferably, both the pins **6** and the bushings **12** may be made of steel hardened to more than 52 HRC surface hardness.

Further, in order to minimize the friction, the pins **6** and/or the bushings **12** may provide a surface roughness Ra less than or equal to 0.8 µm, and can be coated before mounting with graphite powder in aqueous solution.

As can be seen in FIG. 2, each connecting pin **6** may internally include a cylindrical seat **11** for housing a cylindrical solid lubricating element 5, which may be an elongated graphite element, preferably sintered.

The seat **11,** which can define a second longitudinal axis **Y** substantially perpendicular to the axis **X,** can be faced to the inner surface **12'** of the bushing **12.**

Thus, the solid lubricating element **5** will interact directly with the inner surface **12'** so as to gradually abrade at any relative movement between the pin **6** and bushing **12,** which particularly will be in correspondence of the crown gears **C₁** and **C₂**.

This will allow a simple, effective and inexpensive lubrication of the interspace **13** between pin **6** and bushing **12,** ensuring long life to the chain **1** and, consequently, to the oven **100.** It is apparent that this also will minimize the energy consumptions and, more generally, the management cost of the latter.

Suitably, the connecting pins **6** can be inserted in the bushings **12** by removable fastening means **7,** for example an elastic ring.

In this way, it is possible to easily replace the lubricating element **5,** simply by acting on the ring **7** and removing then the pin **6** from the bushing **12.**

In a first preferred, not exclusive embodiment of the invention, illustrated in FIGS. 2, 3 and 4, the seat **11** may consist of a hole passing through the pin **6,** having predetermined length L.

Suitably, the solid lubricating element **5** may have height **H** substantially equal to or less than the length L of the hole **11.**

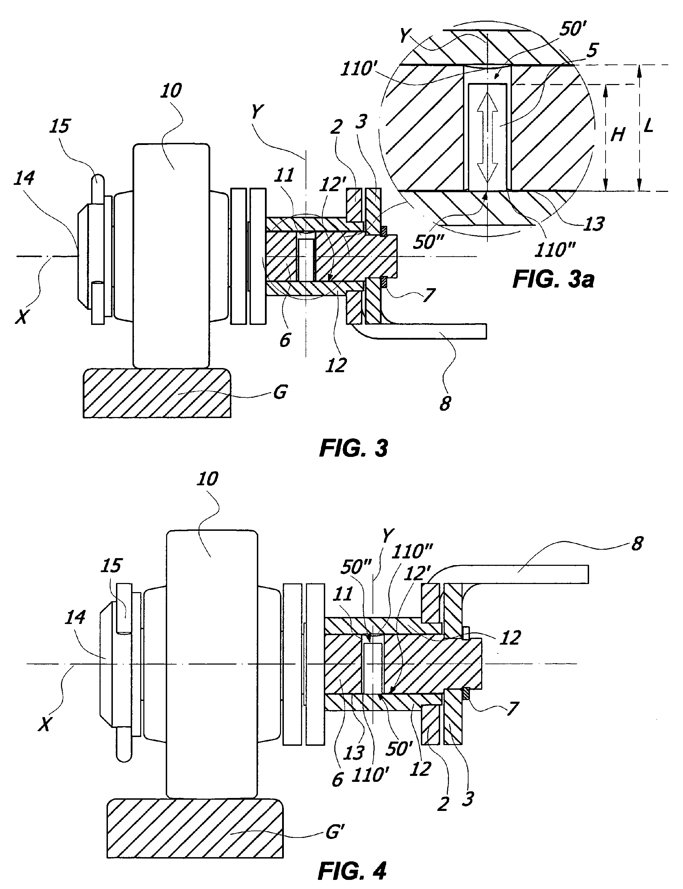

Thus, the solid lubricating element **5** will be free to slide into the seat **11** along the axis **Y,** so that the ends **50'** and **50"** can interact with the inner surface **12'** of the bushing **12** at both the ends **110', 110"** of the same hole **11,** as shown in FIGS. 3 and 4.

In fact, due to the fact that the height **H** is lower than the length L, the solid lubricating element **5** in correspondence of the crown gears **C₁** and **C₂** will pass, by gravity, from one end to the other of the hole **11,** keeping constantly in contact with the surface **12'** both during the going way **A** and the way back **R,** thus achieving a very effective lubricating action of the interspace **13.**

Indeed, as can be seen in FIG. 3, once reached the end of the going way **A,** the bushing **12** will be geared by the crown **C₂**, which put it in motion relatively to the pin **6.**

The end **50"** of the solid lubricating element **5,** which will be in correspondence of the end **110",** will abrade against the surface **12'** for a first angular stroke of the circular motion of the bushing **12** about the crown **C₂**, which may be approximately of 80° - 90°.

Then, as can be seen in FIG. 4, the crown **C₂,** continuing to rotate around its axis **X'₂,** will cause the sliding for gravity of the solid lubricating element **5** inside the hole **11** along the axis **Y,** so that its end **50'** go to abrade against the inner surface **12'** of the bushing **12** by the end **110'** of the hole **11.**

Once reached the end of the rotation of the bushing **12** around the crown **C₂,** the end **50'** of the solid lubricating element **5** will remain constantly in contact with the inner surface **12'** by the end **110'** of the hole **11,** until reaching the crown **C₁.** Here, analogously to what has been described for the crown **C₂,** even if a reversed manner, the lubricating element **5** will slide from the end **110'** to the end **110"** of the hole **11,** with the relative abrasion of the ends **50'** for a first angular stroke and **50"** for the next one.

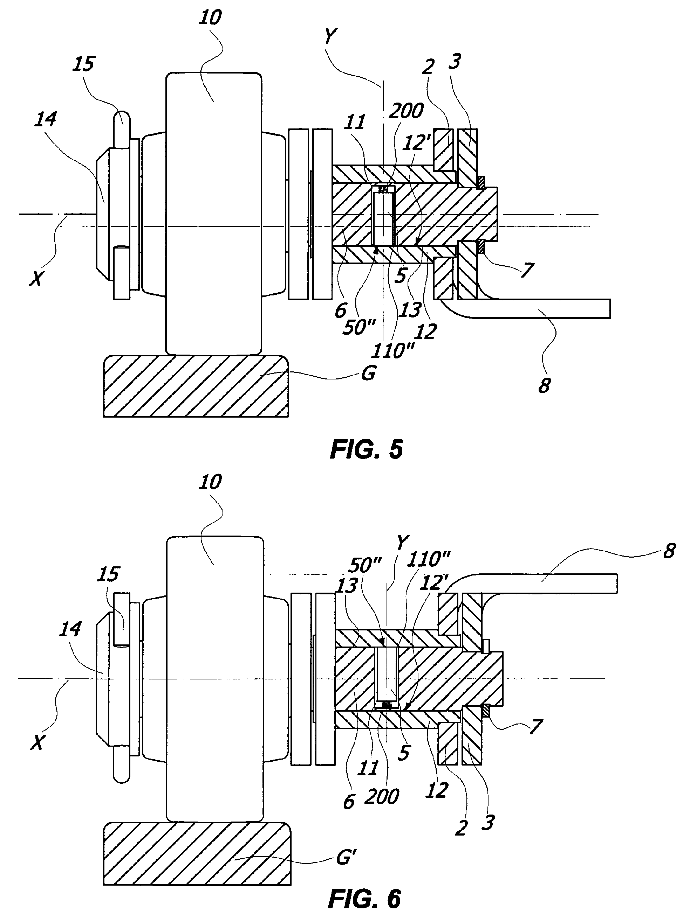

In an alternative embodiment, shown in FIGS. 5 and 6, the seat **11** may consist of a blind hole defining the axis **Y,** which may include elastic contrast means, such as a spring **200,** to push the solid lubricating element **5** against the inner surface **12'** of the bushing **12** in correspondence of the only opening **110'** of the blind hole **11.**

In this embodiment also the solid lubricating element **5** will be constantly in contact with the inner surface **12'** both in the going way **A** and in the way back **R** of the chain. However, unlike the above embodiment, the spring **200** constantly push the end **50"** of the solid lubricating element **5** against the inner surface **12'** in correspondence of the opening **110",** regardless of the rotation of the bushing **12** around the axis **X'₁** and **X'₂.**

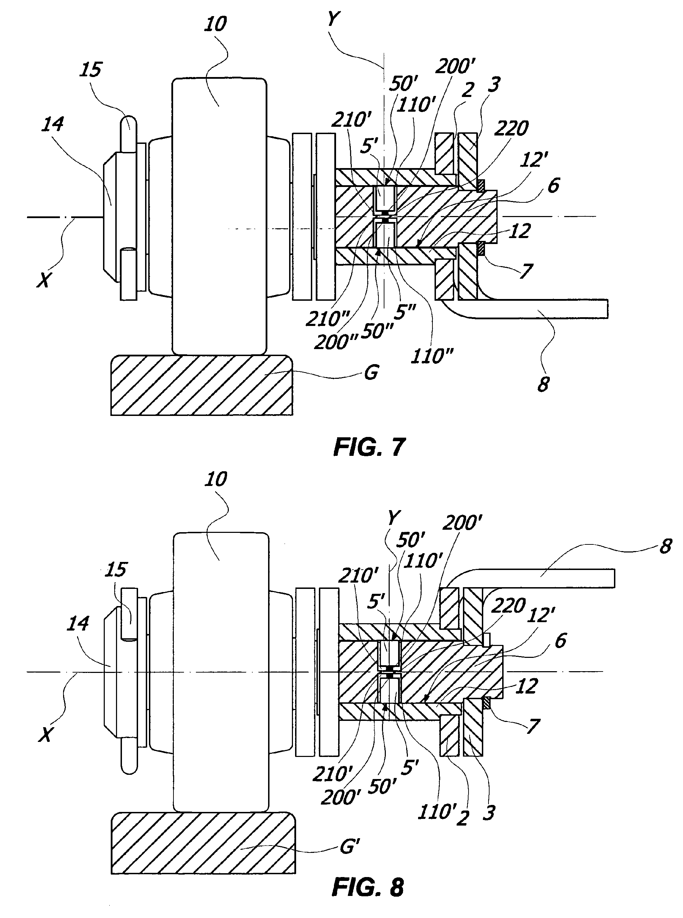

In a further alternative embodiment, shown in FIGS. 7 and 8, the seat **11** may be formed by two blind holes **210', 210",** both defining the axis **Y,** separated by a central separator **220.** Each of the holes **210', 210"** may include respective springs **200', 200"** to push their solid lubricating elements **5', 5"** against the inner surface **12'** of the bushing **12** in correspondence of the openings **110', 110"** of the same holes.

In this embodiment also the solid lubricating elements **5, 5'** will be constantly in contact with the inner surface **12'** both in the going way **A** and in the way back **R** of the chain. However, unlike the above embodiments, the springs **200', 200"** will constantly push the ends **50', 50"** of the respective solid lubricating elements **5, 5'** against the inner surface **12'** in correspondence of the openings **110', 110"** of the holes **210', 210",** regardless of rotation of the bushing 12 around the axis **X'₁** and **X'₂.**

In view of the foregoing, it is understood that the invention achieves the intended objects.

The invention is susceptible of a number of changes and variants, within the inventive concept as disclosed in the appended claims. All the details may be replaced by other technically equivalent elements, and the materials may be different depending on different needs, without departure from the scope of protection expressed by the terms of the appended claims.

## Claims

1. A conveyor chain for use in food ovens for baking pizza and the like, comprising:
- a plurality of inner links (**2**), each one comprising respective end bushings (**12**);
- a plurality of outer links (**3**), each one comprising respective pins (**6**) housed in said bushings (**12**) for connection to said inner links (**2**);
wherein at least one bushing (**12**) of at least one of said inner links (**2**) internally includes at least one solid lubricating element (**5**) for lubricating the interspace (**13**) between the same bushing and the relative connecting pin (**6**),
**characterized in that** said connecting pin (**6**) of said outer link (**3**) comprises at least one seat (**11**) for housing said at least one lubricating element (**5**), said at least one seat (**11**) comprising at least one end (**110'**, **110"**) faced to the inner surface (**12'**) of said at least one bushing (**12**) to fluidically communicate with said interspace (**13**), and
**in that** said at least one end (**110'**, **110"**) of said at least one seat (**11**) has a size that is sufficient to allow the passage therethrough of the corresponding end (**50'**, **50"**) of said solid lubricating element (**5**), said solid lubricating element (**5**) being housed in said at least one seat (**11**) in such a manner to pass through said at least one end (**110'**, **110"**) of said at least one seat (**11**) for interacting with the inner surface (**12'**) of said at least one bushing (**12**), thus gradually abrading and achieving the lubrication of said interspace (**13**) from the inside of said connecting pin.

2. Chain according to claim 1, wherein said at least one solid lubricating element (**5**) is made of a material chosen among the group comprising graphite, molybdenum disulphide, ceramic materials, copper, aluminium-bronze.

3. Chain according to the claim 1 or 2, wherein said pin (**6**) defines a first longitudinal axis (**X**), said seat (**11**) defining a second longitudinal axis (**Y**) incident with said first axis (**X**).

4. Chain according to the claim 3, wherein said second longitudinal axis (**Y**) is substantially perpendicular to said first axis (**X**).

5. Chain according to claim 4 or 5, wherein said seat (**11**) includes at least one through hole having a predetermined length (**L**), said at least one solid lubricating element (**5**) having a height (**H**) substantially equal to or lower than said predetermined length (**L**) so that it is slidingly movable in said seat (**11**) along said second axis (**Y**) to interact with the inner surface (**12'**) of said at least one bushing (**12**) at both ends (**110'**, **110"**) of said hole (**11**).

6. Chain according to claim 4 or 5, wherein said seat (**11**) comprises at least one blind hole which includes elastic contrast means (**200**) to push said at least one solid lubricating element (**5**) against said inner surface (**12'**) of said at least one bushing (**12**) in correspondence of the opening (**110"**) of said blind hole (**11**).

7. Chain according to the claim 6, wherein said seat (**11**) includes two blind holes (**210'**, **210"**) separated by a central separator (**220**), each of these holes including respective elastic contrast means (**200'**, **200"**) to push the respective solid lubricating elements (**5'**, **5"**) against said inner surface (**12'**) of said at least one bushing (**12**) in correspondence of the openings (**110'**, **110"**) of said blind holes.

8. Chain according to any of the preceding claims, wherein said connecting pin (**6**) is inserted in said at least one bushing (**12**) by removable fixing means (**7**), in such a manner to allow the replacement of said at least one lubricating element (**5**).

9. Chain according to any of the preceding claims, wherein said connecting pin (**6**) of said at least one bushing (**12**) is of the full type.

10. Chain according to any of the preceding claims, comprising a plurality of support wheels (**10**) removably coupled externally to said inner links (**2**) and outer links (**3**) to facilitate the replacement thereof.

11. A food oven for baking pizza or the like, **characterized by** comprising at least one conveyor chain according to any of the preceding claims.

## Patentansprüche

1. Förderkette zum Gebrauch in Lebensmittelöfen zum Backen von Pizza und dergleichen, umfassend:
- mehrere innere Glieder (2), die jedes jeweilige Endbuchsen (12) umfasst;
- mehrere äußere Glieder (3), die jedes jeweilige Zapfen (6) umfassen, welche in den Buchsen (12) zur Verbindung mit den inneren Gliedern (2) untergebracht sind;
wobei zumindest eine Buchse (12) von zumindest einem der inneren Glieder (2) intern zumindest ein festes Schmierelement (5) zum Schmieren des Zwischenraums (13) zwischen derselben Buchse und dem zugehörigen Verbindungszapfen (6) enthält,
**dadurch gekennzeichnet, dass** der Verbindungszapfen (6) des äußeren Glieds (3) zumindest einen Sitz (11) zum Unterbringen des zumindest einen Schmierelements (5) umfasst, wobei der zumindest eine Sitz (11) zumindest eine Ende (110', 110") umfasst, das der Innenfläche (12') der zumindest einen Buchse (12) zur Fluidverbindung mit dem Zwischenraum (13) zugekehrt ist, und
dass das zumindest eine Ende (110', 110") des zumindest einen Sitzes (11) eine Größe aufweist, die genügt, um den Durchgang des entsprechenden Endes (50', 50") des festen Schmierelements (5) dort hindurch zu ermöglichen, wobei das feste Schmierelement (5) derart in dem zumindest einen Sitz (11) untergebracht ist, dass es das zumindest eine Ende (110', 110") des zumindest einen Sitzes (11) zum Zusammenwirken mit der Innenfläche (12') der zumindest einen Buchse (12) durchläuft, wodurch es sich allmählich abreibt und die Schmierung des Zwischenraums (13) von der Innenseite des Verbindungszapfens erzielt.

2. Kette nach Anspruch 1, wobei das zumindest eine feste Schmierelement (5) aus einem Material hergestellt ist, das aus der Gruppe ausgewählt ist, die Graphit, Molybdändisulfid, Keramikmaterialien, Kupfer, Aluminium-Bronze umfasst.

3. Kette nach einem der Ansprüche 1 oder 2, wobei der Zapfen (6) eine erste Längsachse (X) definiert, wobei der Sitz (11) eine zweite Längsachse (Y) definiert, die einfallend zur ersten Achse (X) ist.

4. Kette nach Anspruch 3, wobei die zweite Längsachse (Y) im Wesentlichen senkrecht zu der ersten Achse (X) steht.

5. Kette nach einem der Ansprüche 4 oder 5, wobei der Sitz (11) zumindest ein Durchgangsloch mit einer vorgegebenen Länge (L) enthält, wobei das zumindest eine feste Schmierelement (5) eine Höhe (H) aufweist, die im Wesentlichen gleich der oder geringer als die vorgegebene Länge (L) ist, sodass es in dem Sitz (11) entlang der zweiten Achse (Y) zum Zusammenwirken mit der Innenfläche (12') der zumindest einen Buchse (12) an beiden Enden (110', 110") des Lochs (11) gleitet.

6. Kette nach einem der Ansprüche 4 oder 5, wobei der Sitz (11) ein Sackloch umfasst, das elastische Kontrastmittel (200) zum Drücken des zumindest einen festen Schmierelements (5) an die Innenfläche (12') der zumindest einen Buchse (12) entsprechend der Öffnung (110") des Sacklochs (11) enthält.

7. Kette nach Anspruch 6, wobei der Sitz (11) zwei Sacklöcher (210', 210") enthält, die durch ein mittiges Distanzstück (220) voneinander getrennt sind, wobei jedes dieser Löcher jeweilige elastische Kontrastmittel (200', 200") zum Drücken der jeweiligen festen Schmierelemente (5', 5") an die Innenfläche (12') der zumindest einen Buchse (12) entsprechend der Öffnungen (110', 110") der Sacklöcher enthält.

8. Kette nach einem der vorhergehenden Ansprüche, wobei der Verbindungszapfen (6) derart durch austauschbare Befestigungsmittel (7) in der zumindest einen Buchse (12) eingelegt ist, dass das Austauschen des zumindest einen Schmierelements (5) ermöglicht ist.

9. Kette nach einem der vorhergehenden Ansprüche, wobei der Verbindungszapfen (6) der zumindest einen Buchse (12) übermäßig ist.

10. Kette nach einem der vorhergehenden Ansprüche, umfassend mehrere Stützräder (10), die austauschbar extern an die inneren Glieder (2) und äußeren Glieder (3) zum Erleichtern ihres Austauschs gekuppelt sind.

11. Lebensmittelofen zum Backen von Pizza oder dergleichen, **dadurch gekennzeichnet, dass** er zumindest eine Förderkette nach einem der vorhergehenden Ansprüche umfasst.

## Revendications

1. Une chaîne de convoyeur à utiliser dans des fours d'aliments pour cuisiner une pizza ou similaire, comprenant:
- une pluralité de maillons intérieurs (2), chacune comprenant douilles d'extrémité respectives (12);
- une pluralité de maillons extérieurs (3), comportant chacune des axes respectives (6) logés dans lesdites douilles (12) pour la liaison à lesdites maillons intérieurs (2);
dans laquelle au moins une douille (12) d'au moins un desdits maillons intérieurs (2) comporte intérieurement au moins un élément solide de lubrification (5) pour lubrifier l'espace intermédiaire (13) entre la même douille et l'axe de liaison respective (6),
**caractérisée en ce que** ledit axe de liaison (6) dudit maillon extérieur (3) comprend au moins un siège (11) pour loger ledit au moins un élément de lubrification (5), ledit au moins un siège (11) comportant au moins une extrémité (110', 110") faisant face à la surface intérieure (12') de ladite au moins une douille (12) pour communiquer fluidiquement avec ledit espace intermédiaire (13), et
**en ce que** ladite au moins une extrémité (110', 110") dudit au moins un siège (11) a une dimension qui est suffisante pour permettre le passage à travers elle de l'extrémité correspondante (50', 50") dudit élément de lubrification solide (5), ledit élément de lubrification solide (5) étant logé dans ledit au moins un siège (11) de façon à passer à travers ladite au moins une extrémité (110', 110") dudit au moins un siège (11) pour interagir avec la surface intérieure (12') de ladite au moins une douille (12), de telle manière qu'il s'abrase progressivement et lubrifie ledit espace intermédiaire (13) de l'intérieur dudit axe de liaison.

2. Chaîne selon la revendication 1, dans laquelle ledit au moins un élément solide de lubrification (5) est réalisé en un matériau choisi parmi le groupe comprenant le graphite, le bisulfure de molybdène, les matériaux céramiques, le cuivre, l'aluminium-bronze.

3. Chaîne selon la revendication 1 ou 2, dans laquelle ledit axe de liaison (6) définit un premier axe longitudinal (X), ledit siège (11) définissant un second axe longitudinal (Y) incident avec ledit premier axe (X).

4. Chaîne selon la revendication 3, dans laquelle ledit second axe longitudinal (Y) est sensiblement perpendiculaire audit premier axe (X).

5. Chaîne selon la revendication 4 ou 5, dans laquelle ledit siège (11) comprend au moins un trou traversant ayant une longueur prédéterminée (L), ledit au moins un élément de lubrification solide (5) ayant une hauteur (H) sensiblement égale ou inférieure de ladite longueur prédéterminée (L) de sorte qu'il est mobile en coulissement dans ledit siège (11) le long dudit second axe (Y) pour interagir avec la surface intérieure (12') de ladite au moins une douille (12) aux deux extrémités (110', 110") dudit trou (11).

6. Chaîne selon la revendication 4 ou 5, dans laquelle ledit siège (11) comprend au moins un trou borgne qui comprend des moyens de contraste élastiques (200) pour pousser ledit au moins un élément de lubrification solide (5) contre ladite surface intérieure (12') de ladite au moins une douille (12) en correspondance avec l'ouverture (110") dudit trou borgne (11).

7. Chaîne selon la revendication 6, dans laquelle ledit siège (11) comprend deux trous borgnes (210', 210") séparées par un séparateur central (220), chacun de ces trous comportant un moyen de contraste élastique respective (200', 200") pour pousser les éléments de lubrification solides respectifs (5', 5") contre ladite surface intérieure (12') de ladite au moins une douille (12) en correspondance avec les ouvertures (110', 110") desdites trous borgnes.

8. Chaîne selon l'une quelconque des revendications précédentes, dans laquelle ledit axe de liaison (6) est inséré dans ladite au moins une douille (12) par un moyen de fixation amovible (7), de telle manière à permettre le remplacement dudit au moins un élément de lubrification (5).

9. Chaîne selon l'une quelconque des revendications précédentes, dans laquelle ledit axe de liaison (6) de ladite au moins une douille (12) est du type plein.

10. Chaîne selon l'une quelconque des revendications précédentes, comprenant une pluralité de roues de support (10) couplé de manière amovible à l'extérieur desdits maillons intérieurs (2) et maillons extérieurs (3) pour faciliter le remplacement de celles-ci.

11. Un four de cuisson alimentaire pour pizza ou similaire, **caractérisé en ce qu'**il comprend au moins une chaîne de convoyeur selon l'une quelconque des revendications précédentes.
